# FASCICULE DE BREVET EUROPEEN

(11) **EP 3 810 962 B1**
(45) Date de publication et mention de la délivrance du brevet: **29.06.2022**
(21) Numéro de dépôt: 19732076.5
(22) Date de dépôt: 14.05.2019
(51) Int. Cl.: F16H 63/50, F16H 61/06, F16H 61/12

(54) **CONTRÔLE DU COUPLE TRANSMIS PAR UNE BOÎTE DE VITESSES AUTOMATIQUE D'UN VÉHICULE PENDANT UN CHANGEMENT DE RAPPORT**
STEUERUNG DES VON EINEM AUTOMATIKGETRIEBE EINES KRAFTFAHRZEUGS ÜBERTRAGENEN DREHMOMENTS WÄHREND EINES GANGWECHSELS
CONTROL OF TORQUE TRANSMITTED BY AN AUTOMATIC TRANSMISSION OF A VEHICLE DURING A GEAR CHANGE

(30) Priorité: 20.06.2018 FR 1855435
(43) Date de publication de la demande: 28.04.2021
(73) Titulaire: PSA Automobiles SA, 78300 Poissy (FR)
(72) Inventeur: SCHAEFFER, Eric, 75013 Paris (FR); HABBANI, Ridouane, 92600 Asnieres Sur Seine (FR)
(86) Numéro de dépôt international: PCT/FR2019/051086
(87) Numéro de publication internationale: WO 2019/243676

(56) Documents cités:
- EP-A1- 2 256 375
- US-A1- 2015 354 474
- US-A1- 2016 121 872

## Description

L'invention concerne les véhicules qui comprennent une boîte de vitesses de type automatique à trains épicycloïdaux et couplée à une machine motrice (thermique ou non-thermique), et plus précisément le contrôle du couple moteur qui est transmis par une telle boîte de vitesses.

Comme le sait l'homme de l'art, une boîte de vitesses automatique, du type de celle mentionnée dans le paragraphe précédent, comprend des trains épicycloïdaux dont les différentes parties (couronnes, satellites, planétaires et porte-satellites) sont pilotées par des éléments hydrauliques (embrayages et freins) associés pour créer les différents rapports de démultiplication. Chaque embrayage, tout comme chaque frein, comprend un piston chargé d'exercer une pression choisie sur des disques (d'embrayage).

La transmission du couple moteur, qui est fourni par la machine motrice, est garantie par la pression qui est exercée par les pistons des embrayages et freins.

Les changements de rapport (d'un rapport dit sortant vers un rapport dit entrant), ou changements de démultiplication, sont effectués en « croisant » (ou inversant) les pressions qui sont respectivement exercées par les pistons des éléments hydrauliques associés aux trains épicycloïdaux des rapports sortant et entrant. Pour ce faire, on vidange l'élément hydraulique (embrayage ou frein) associé au rapport sortant et l'on augmente la pression dans l'élément hydraulique associé au rapport entrant. On notera que durant un croisement on pilote les pressions dans les deux éléments hydrauliques concernés afin de continuer à transmettre du couple moteur aux roues et donc de ne pas perturber l'accélération longitudinale du véhicule.

Actuellement, le dimensionnement de la boîte de vitesses automatique prend en compte le couple moteur maximal qui doit être transmis lorsqu'un rapport est engagé avec l'embrayage verrouillé, mais pas le couple moteur maximal qui doit être transmis lors d'un changement de rapport (rapport sortant vers rapport entrant) avec l'embrayage glissant. La capacité de transmission du couple moteur en phase de glissement d'un embrayage dépend notamment de la surface de frottement de ses disques, du nombre de ses disques, du diamètre moyen de ses disques et de la pression exercée sur ses disques.

Le nombre de disques utilisés et le niveau de pression exercé sur ces disques durant un changement de rapport provoque une dissipation d'énergie qui induit non seulement des pertes mais également une usure des pièces (fonction du nombre de passages du rapport associé).

Afin de diminuer les pertes, qui augmentent la consommation d'énergie et donc la production de polluants, il est connu de sous-dimensionner la boîte de vitesses diminuant ainsi son poids, et de mettre en oeuvre une stratégie de limitation du couple moteur maximal reçu par cette boîte de vitesses pendant certaines phases de roulage du véhicule.

Cependant, actuellement ce type de stratégie consiste généralement à réduire le couple moteur fourni par la machine motrice dans les phases où le sous-dimensionnement de la boîte de vitesses ne permet pas de transmettre l'intégralité du couple moteur prévu normalement. En fait, le couple moteur fourni n'est réduit que lorsque la chaîne de transmission est fermée (embrayages fermés), mais pas lors des phases de changement de rapport pendant lesquelles surviennent les croisements de pression dans les éléments hydrauliques concernés. Il en résulte une perturbation des performances de la chaîne de transmission puisque les couples transmis lorsqu'un rapport est engagé et lors d'un changement de rapport sont différents. En outre, cette situation peut augmenter le glissement des embrayages et augmenter leur usure, dégradant alors les performances de la chaine de transmission.

Pour remédier à ces problèmes, il est connu du document de brevet US-A1-2015/0354474 une stratégie prenant en compte les phases de changement de rapport. Cependant, cette stratégie n'est pas optimale et ne peut limiter l'usure des embrayages car elle ne prend pas en compte l'état réel de la boîte de vitesses.

L'invention a donc notamment pour but d'améliorer la situation.

Elle propose notamment à cet effet un dispositif de contrôle destiné à équiper un véhicule comprenant une boîte de vitesses de type automatique à trains épicycloïdaux définissant des rapports et associés chacun à un embrayage comportant un piston exerçant une pression sur des disques, et une machine motrice fournissant un couple moteur à la boîte de vitesses. Ce dispositif de contrôle se caractérise par le fait qu'il comprend des moyens de contrôle qui, lorsqu'un changement d'un rapport sortant à un rapport entrant a été décidé, déterminent une pression devant être exercée par le piston associé au rapport entrant pour transmettre intégralement le couple moteur, ces moyens de contrôle pilotant
- soit le couple moteur à une valeur de consigne de couple et la pression à une pression optimale pour transmettre intégralement la consigne de couple lorsqu'une température d'huile dans la boîte de vitesses est inférieure à un premier seuil choisi et qu'un nombre d'utilisations cumulées de l'embrayage contenant ce piston depuis la mise en service du véhicule est inférieur à un second seuil choisi,
- soit le couple moteur à une valeur de consigne de couple réduite et la pression à une pression réduite pour transmettre intégralement la consigne de couple réduite lorsque la température d'huile est supérieure au premier seuil choisi ou que le nombre d'utilisations est supérieur au second seuil choisi, la valeur de consigne de couple réduite étant égale à la valeur de consigne de couple moins une valeur déterminée et la pression réduite étant inférieure à la pression optimale.

On comprendra par le nombre d'utilisations cumulées de l'embrayage contenant ce piston depuis la mise en service du véhicule, dans tout le texte de ce document, un nombre mémorisé dans les moyens de contrôle ou dans le dispositif de contrôle, et pour chaque embrayage, le moyen de contrôle incrémentant ce nombre à chaque utilisation de l'embrayage et ceci depuis le premier instant du véhicule en sortie de ligne de fabrication. Ce nombre peut être réinitialisé en cas de changement de la boîte de vitesses en service après-vente.

On comprendra par pression optimale, dans tout le texte de ce document, une pression minimale majorée, la pression minimale transmettant exactement la consigne de couple, la majoration étant une marge de sécurité entre 5 à 10% de la pression minimale.

L'expression « pour transmettre intégralement la consigne de couple » signifie, dans tout le texte de ce document, le fait que la pression optimale ou réduite, permette de transmettre respectivement le couple moteur piloté à la valeur de consigne de couple ou à la valeur de consigne de couple réduite.

Grâce à l'invention, la durée de vie de la boîte de vitesses est garantie sans que sa capacité de transmission de couple ne soit limitée quand elle est neuve ou récente et en présence d'une température d'huile optimale.

Le dispositif de contrôle selon l'invention peut comporter d'autres caractéristiques qui peuvent être prises séparément ou en combinaison, et notamment :
- ses moyens de contrôle déterminent la valeur déterminée en fonction d'au moins un paramètre qui est choisi parmi une vitesse en cours du véhicule, le rapport sortant, et une manœuvre en cours du véhicule ;
- ses moyens de contrôle utilisent un premier seuil choisi qui est compris entre 90°C et 110°C ;
- ses moyens de contrôle utilisent un second seuil choisi qui est compris entre 25000 et 35000.
- ses moyens de contrôle limitent la valeur déterminée à un maximum de 10% de la valeur de consigne de couple. En effet, jusqu'à ce maximum de 10%, des accélérations ou décélérations du véhicule provoquées par cette diminution du couple moteur sont peu ou pas perceptibles par le conducteur.
- Dans une variante de l'invention, ses moyens de contrôle limitent avantageusement la valeur déterminée à un maximum de 5% de la valeur de consigne de couple.

L'invention propose également un calculateur comprenant un dispositif de contrôle du type de celui décrit ci-avant.

L'invention propose également un véhicule, éventuellement de type automobile, et comprenant a) une boîte de vitesses de type automatique à trains épicycloïdaux définissant des rapports et associés chacun à un embrayage comportant un piston exerçant une pression sur des disques, b) une machine motrice fournissant un couple moteur à la boîte de vitesses, et c) un dispositif de contrôle du type de celui présenté ci-avant ou un calculateur du type de celui présenté ci-avant.

L'invention propose également un procédé de contrôle, destiné à être mis en œuvre dans un véhicule comprenant une boîte de vitesses de type automatique à trains épicycloïdaux définissant des rapports et associés chacun à un embrayage comportant un piston exerçant une pression sur des disques, et une machine motrice fournissant un couple moteur à la boîte de vitesses. Ce procédé se caractérise par le fait qu'il comprend une étape dans laquelle, lorsqu'un changement d'un rapport sortant à un rapport entrant a été décidé, le procédé détermine une pression devant être exercée par le piston associé audit rapport entrant pour transmettre intégralement le couple moteur, et commande soit le couple moteur à une valeur de consigne de couple et la pression à une pression optimale pour transmettre intégralement la consigne de couple lorsqu'une température d'huile dans la boîte de vitesses est inférieure à un premier seuil choisi et qu'un nombre d'utilisations cumulées de l'embrayage contenant ce piston depuis la mise en service du véhicule est inférieur à un second seuil choisi, soit le couple moteur à une valeur de consigne de couple réduite et la pression à une pression réduite pour transmettre intégralement la consigne de couple réduite lorsque la température d'huile est supérieure au premier seuil choisi ou que le nombre d'utilisations est supérieur au second seuil choisi, la valeur de consigne de couple réduite étant égale à la valeur de consigne de couple moins une valeur déterminée et la pression réduite étant inférieure à la pression optimale.

Par exemple, dans cette étape, le procédé détermine la valeur déterminée en fonction d'au moins un paramètre choisi parmi une vitesse en cours du véhicule, le rapport sortant, et une manœuvre en cours du véhicule.

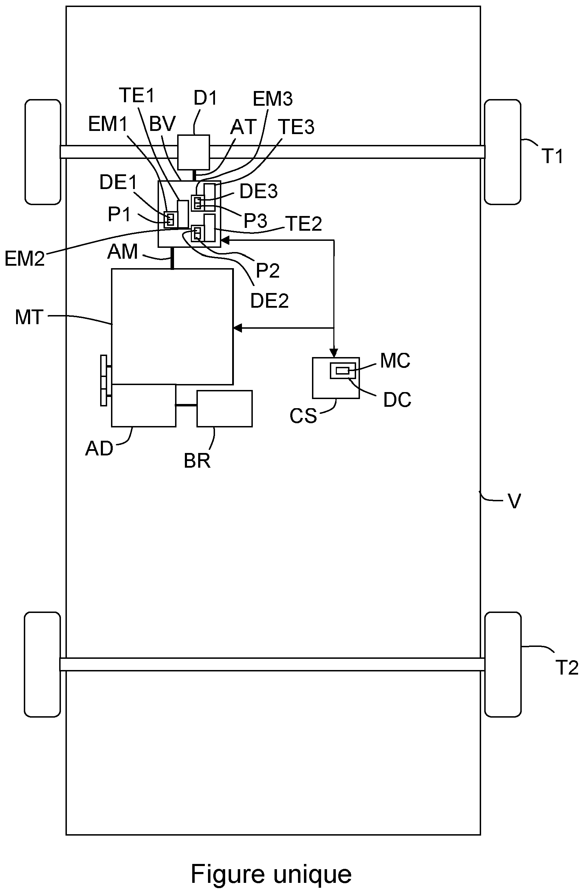

D'autres caractéristiques et avantages de l'invention apparaîtront à l'examen de la description détaillée ci-après, et du dessin annexé, sur lequel l'unique figure illustre schématiquement et fonctionnellement un véhicule comprenant une chaîne de transmission et un calculateur de supervision équipé d'un dispositif de contrôle selon l'invention.

L'invention a notamment pour but de proposer un dispositif de contrôle DC destiné à équiper un véhicule V comprenant une chaîne de transmission comportant au moins une machine motrice (thermique ou non-thermique) MT fournissant du couple moteur cm à une boîte de vitesses BV de type automatique à trains épicycloïdaux.

Dans ce qui suit, on considère, à titre d'exemple non limitatif, que le véhicule V est de type automobile. Il s'agit par exemple d'une voiture, et notamment d'une voiture hybride. Mais l'invention n'est pas limitée à ce type de véhicule. Elle concerne en effet tout type de véhicule comportant au moins une machine motrice (thermique ou non-thermique) couplée à une boîte de vitesses de type automatique à trains épicycloïdaux et fournissant du couple moteur pour au moins un train (ou analogue). Par conséquent, l'invention concerne au moins les véhicules terrestres.

On entend ici par « machine motrice non-thermique » une machine agencée de manière à fournir ou récupérer du couple pour déplacer un véhicule, soit seule soit en complément d'un moteur thermique. Il pourra par exemple s'agir d'une machine (ou moteur) électrique, d'une machine hydraulique, d'une machine pneumatique (ou à air comprimé), ou d'un volant d'inertie.

Par ailleurs, on entend ici par « moteur thermique » une machine ou un moteur consommant du carburant pour produire du couple pour déplacer un véhicule.

On a schématiquement représenté sur l'unique figure un véhicule V comprenant une chaîne de transmission, un calculateur de supervision CS propre à superviser (ou gérer) le fonctionnement de la chaîne de transmission, et un dispositif de contrôle DC selon l'invention.

La chaîne de transmission comprend ici, notamment, une machine motrice MT, un arbre moteur AM, une boîte de vitesses BV et un arbre de transmission AT.

Il est important de noter que la chaîne de transmission est ici de type classique (c'est-à-dire que sa machine motrice MT est thermique, et donc qu'elle est dépourvue de machine motrice non-thermique). Mais elle pourrait être de type hybride. Dans ce cas elle comporte, en complément de sa machine motrice thermique, au moins une machine motrice non-thermique chargée de produire du couple, à partir de l'énergie stockée dans un moyen de stockage d'énergie, pour au moins un train (éventuellement différent de celui qui est couplé à la machine motrice thermique), en complément ou à la place du couple moteur produit par la machine motrice thermique. Chaque machine motrice non-thermique peut, par exemple, être une machine (ou un moteur) électrique, une machine hydraulique, ou une machine pneumatique (ou à air comprimé), ou un volant d'inertie.

La machine motrice MT (ici un moteur thermique) comprend un vilebrequin (non représenté) qui est solidarisé fixement à l'arbre moteur AM afin d'entraîner ce dernier (AM) en rotation. Il est destiné à fournir le couple moteur cm pour au moins un premier train T1 (ici de roues), via (ici) la boîte de vitesses BV. Mais dans une variante de réalisation hybride il pourrait fournir du couple pour au moins un train via un embrayage, une machine motrice non-thermique et la boîte de vitesses BV.

Par exemple, le premier train T1 est situé à l'avant du véhicule V, et couplé à l'arbre de transmission AT, de préférence, et comme illustré, via un différentiel (ici avant) D1. Mais dans une variante ce premier train T1 pourrait être situé à l'arrière du véhicule V. Dans une autre variante, le moteur thermique MT pourrait fournir le couple moteur cm pour des premier T1 et second T2 trains.

La boîte de vitesses BV est de type automatique à au moins deux trains épicycloïdaux TEj définissant des rapports (au moins deux). Dans l'exemple non limitatif illustré sur l'unique figure, la boîte de vitesses BV comprend trois trains épicycloïdaux TE1 à TE3 (j = 1 à 3). Mais elle pourrait ne comporter que deux trains épicycloïdaux ou bien plus de trois (cela dépend en effet du nombre de rapports envisagé).

Chaque train épicycloïdal TEj comprend, par exemple, des couronnes, satellites, planétaires et porte-satellites qui sont pilotés par (et donc associés à), notamment, un embrayage EMj qui comprend un piston Pj chargé d'exercer une pression sur un ensemble de disques (d'embrayage) DEj.

L'entrée de cette boîte de vitesses BV est couplée à l'arbre moteur AM pour recevoir le couple moteur cm fourni par le moteur thermique MT. La sortie de cette boîte de vitesses BV est couplée à l'arbre de transmission AT pour lui fournir un couple transmis ct.

La chaîne de transmission comprend également un démarreur ou un alterno-démarreur AD couplé au moteur thermique MT et chargé de lancer ce dernier (MT) afin de lui permettre de démarrer. Ce lancement se fait grâce à de l'énergie électrique qui est stockée dans une batterie rechargeable BR, qui alimente également le réseau de bord du véhicule V auquel sont connectés les équipements électriques de ce dernier (V). Cette batterie rechargeable BR est à très basse tension (par exemple 12 V, 24 V ou 48V).

Les fonctionnements du moteur thermique MT et de la boîte de vitesses BV sont contrôlés par le calculateur de supervision CS.

Comme indiqué précédemment, l'invention propose un dispositif de contrôle DC destiné à équiper le véhicule V afin de contrôler le couple moteur qui est transmis par la boîte de vitesses BV pendant les changements de rapport (d'un rapport sortant, jusqu'alors engagé, à un rapport entrant, à engager).

Dans l'exemple non limitatif illustré sur l'unique figure, le dispositif de contrôle DC fait partie du calculateur de supervision CS. Mais cela n'est pas obligatoire. Ce dispositif de contrôle DC pourrait en effet être un équipement couplé au calculateur de supervision CS, directement ou indirectement. Par conséquent, le dispositif de contrôle DC peut être réalisé sous la forme de modules logiciels (ou informatiques ou encore « software »), ou bien d'une combinaison de circuits électroniques (ou « hardware ») et de modules logiciels.

Un dispositif de contrôle DC, selon l'invention, comprend des moyens de contrôle MC qui interviennent chaque fois qu'un changement de rapport (sortant vers entrant) a été décidé, par exemple par le calculateur de supervision CS, pendant que le moteur thermique MT est en train de fournir un couple moteur cm, ici pour faire tourner les roues motrices du premier train T1.

Ces moyens de contrôle MC sont agencés de manière à piloter :
- soit le couple moteur à une valeur de consigne de couple et la pression à une pression optimale po qui doit être exercée par le piston Pj qui est associé au rapport entrant pour transmettre intégralement la consigne de couple cc, lorsque la température d'huile th dans la boîte de vitesses BV est inférieure à un premier seuil s1 choisi et que le nombre d'utilisations cumulées nj de l'embrayage EMj contenant ce piston Pj depuis la mise en service du véhicule est inférieur à un second seuil s2 choisi,
- soit le couple moteur à une valeur de consigne de couple réduite cr et la pression à une pression réduite pr qui doit être exercée par le piston Pj qui est associé au rapport entrant pour pour transmettre intégralement la consigne de couple réduite cr lorsque cette température d'huile th est supérieure au premier seuil choisi s1 ou que ce nombre d'utilisations cumulées nj est supérieur au second seuil choisi s2, la valeur de consigne de couple réduite cr étant égale à la valeur de consigne de couple cc moins une valeur déterminée vc (soit cr = cc - vc), et la pression réduite pr étant inférieure à la pression optimale po.

En d'autres termes, soit l'on a simultanément th < s1 et nj < s2 et dans ce cas le piston Pj associé au rapport entrant exerce sur les disques DEj associés une pression optimale po fonction de la consigne de couple cc, soit l'on a th > s1 ou nj > s2 et dans ce cas le piston Pj associé au rapport entrant exerce sur les disques DEj associés la pression réduite pr fonction d'un couple réduit cr égal à cc - vc.

On comprendra que l'invention nécessite qu'un équipement du véhicule V, comme par exemple le calculateur de supervision CS ou le dispositif de contrôle DC, comptabilise le nombre d'utilisations nj de chaque embrayage EMj de la boîte de vitesses BV, lors de chaque changement de rapport le concernant.

L'invention permet de garantir la durée de vie de la boîte de vitesses BV sans pour autant limiter sa capacité de transmission de couple quand elle est neuve ou récente (nj faible) et en présence d'une température d'huile th optimale. En outre, la dégradation de performance pendant un changement de rapport reste limitée et n'est effective que dans des conditions particulières qui ne perturbent pas le conducteur du véhicule V.

Par exemple, les moyens de contrôle MC peuvent être agencés de manière à déterminer la valeur déterminée vc en fonction d'au moins un paramètre qui est choisi parmi la vitesse en cours du véhicule V, le rapport sortant, et une manœuvre en cours du véhicule V.

Plus la vitesse du véhicule V sera élevée, moins la valeur déterminée vc sera importante. Il est en effet connu de l'homme de l'art que plus la vitesse est élevée moins on a besoin d'un couple moteur important pour évoluer.

Plus le rapport entrant sera élevé, moins la valeur déterminée vc sera importante. Il est en effet connu de l'homme de l'art que plus le rapport est élevé moins on a besoin d'un couple moteur important pour évoluer.

Dans le cas d'une manœuvre en cours du véhicule V, comme par exemple pendant un créneau ou une sortie d'un emplacement de parking, on calcule la puissance afin de garantir la possibilité de manœuvrer le véhicule V.

Par exemple, les moyens de contrôle MC peuvent partir d'une valeur de couple de base égale au couple de consigne cc réduit de 5%, puis moduler cette valeur de couple de base en fonction de l'un au moins des paramètres précités (vitesse, rapport entrant, manœuvre) pour obtenir la valeur déterminée vc.

Avantageusement, les moyens de contrôle MC limitent la valeur déterminée vc à un maximum de 10% de la valeur de consigne de couple cc.

Egalement par exemple, les moyens de contrôle MC peuvent utiliser un premier seuil choisi s1 qui est compris entre 90°C et 110°C. Par exemple, ils peuvent utiliser un premier seuil choisi s1 égal à 100°C. D'une manière générale ce premier seuil choisi s1 correspond à la valeur maximale au-delà de laquelle l'usure de la boîte de vitesses BV (et notamment des garnitures) commence à augmenter notablement.

Egalement par exemple, les moyens de contrôle MC peuvent utiliser un second seuil choisi s2 qui est compris entre 25000 et 35000. Par exemple, on peut utiliser un second seuil choisi s2 égal à 30000. Ce seuil s2 correspond à un nombre d'activations des éléments hydrauliques (frein et embrayage EMj). Il correspond à ce que l'on a coutume d'appeler un « profil de mission », lequel consiste à quantifier le nombre de passages de rapports que connaitra la boîte de vitesses BV dans son utilisation complète. On détermine donc le nombre de sollicitations des éléments hydrauliques.

Il est important de noter que l'invention peut être également considérée sous l'angle d'un procédé de contrôle, pouvant être notamment mis en œuvre au moyen d'un dispositif de contrôle DC du type de celui présenté ci-avant. Les fonctionnalités offertes par la mise en œuvre du procédé selon l'invention étant identiques à celles offertes par le dispositif de contrôle DC présenté ci-avant, seule la combinaison de fonctionnalités principales offerte par le procédé est présentée ci-après.

Ce procédé de contrôle comprend une étape dans laquelle, lorsqu'un changement du rapport sortant au rapport entrant a été décidé (par exemple par le calculateur de supervision CS), le procédé mis en œuvre par le dispositif de contrôle DC du véhicule V détermine la pression devant être exercée par le piston Pj associé au rapport entrant pour transmettre intégralement le couple moteur cm, et commande
- soit le couple moteur cm à la valeur de consigne de couple cc et la pression à la pression optimale po pour transmettre intégralement la consigne de couple cc lorsque la température d'huile th dans la boîte de vitesses BV est inférieure au premier seuil choisi S1 et qu'un nombre d'utilisations cumulées nj de l'embrayage EMj contenant ce piston Pj depuis la mise en service du véhicule est inférieur au second seuil choisi S2,
- soit le couple moteur cm à la valeur de consigne de couple réduite cr et la pression à là pression réduite pr pour transmettre intégralement la consigne de couple réduite cr lorsque la température d'huile th est supérieure au premier seuil choisi S1 ou que le nombre d'utilisations nj est supérieur au second seuil choisi S2, la valeur de consigne de couple réduite cr étant égale à la valeur de consigne de couple cc moins la valeur déterminée vc et la pression réduite pr étant inférieure à la pression optimale po.

On notera que dans tous les exemples donnés, la pression réduite pr est inférieure à la pression optimale po, mais permet de transmettre intégralement la consigne de couple réduite cr. Une relation entre la pression optimale po et la pression réduite pr est par exemple une fonction linéaire : dans ce cas, si le couple de consigne réduite cr correspond au couple de consigne cc réduit de 5%, la pression réduite pr correspond à la pression optimale po réduite de 5%. Mais cette fonction n'est pas nécessairement linéaire, et elle dépend par exemple de la technologie et/ou d'une architecture de l'embrayage EMj, de la température d'huile th, de la vitesse de rotation de l'embrayage EMj.

En outre, comme déjà explicité, la pression optimale po correspond à une pression minimale majorée, la pression minimale transmettant exactement la consigne de couple cc, la majoration étant une marge de sécurité entre 5 à 10% de la pression minimale. De même, la pression réduite pr correspond à une pression minimale réduite majorée, la pression minimale réduite transmettant exactement la consigne de couple réduite cr, la majoration étant une marge de sécurité entre 5 à 10% de la pression minimale réduite. Mais pour éviter une usure prononcée de l'embrayage EMj lorsque la température d'huile th est supérieure au premier seuil choisi S1 ou que le nombre d'utilisations nj est supérieur au second seuil choisi S2, il peut être avantageux de considérer une marge de sécurité différente entre la pression optimale po et la pression réduite pr. Par exemple, on peut appliquer une marge de sécurité plus grande sur la pression réduite pr pour limiter d'avantage les possibilités de glissement de l'embrayage EMj, et donc limiter son usure.

## Revendications

1. Dispositif de contrôle (DC) pour un véhicule (V) comprenant
- i) une boîte de vitesses (BV) de type automatique à trains épicycloïdaux (TEj) définissant des rapports et associés chacun à un embrayage (EMj) comportant un piston (Pj) exerçant une pression sur des disques (DEj), et
- ii) une machine motrice (MT) fournissant un couple moteur à ladite boîte de vitesses (BV),
- iii) des moyens de contrôle (MC) qui, lorsqu'un changement d'un rapport sortant à un rapport entrant a été décidé, déterminent une pression devant être exercée par le piston (Pj) associé au rapport entrant pour transmettre intégralement le couple moteur, **caractérisé en ce que** les moyens de contrôle (MC) pilotent
- soit le couple moteur à une valeur de consigne de couple et la pression à une pression optimale pour transmettre intégralement la consigne de couple lorsqu'une température d'huile dans la boîte de vitesses (BV) est inférieure à un premier seuil choisi et qu'un nombre d'utilisations cumulées de l'embrayage (EMj) contenant ce piston (Pj) depuis la mise en service du véhicule est inférieur à un second seuil choisi,
- soit le couple moteur à une valeur de consigne de couple réduite et la pression à une pression réduite pour transmettre intégralement la consigne de couple réduite lorsque la température d'huile est supérieure au premier seuil choisi ou que le nombre d'utilisations est supérieur au second seuil choisi, la valeur de consigne de couple réduite étant égale à la valeur de consigne de couple moins une valeur déterminée et la pression réduite étant inférieure à la pression optimale.

2. Dispositif selon la revendication 1, **caractérisé en ce que** lesdits moyens de contrôle (MC) déterminent la valeur déterminée en fonction d'au moins un paramètre choisi parmi une vitesse en cours du véhicule (V), le rapport sortant, et une manœuvre en cours du véhicule (V).

3. Dispositif selon la revendication 1 ou 2, **caractérisé en ce que** les moyens de contrôle (MC) utilisent un premier seuil choisi compris entre 90°C et 110°C.

4. Dispositif selon l'une des revendications 1 à 3, **caractérisé en ce que** les moyens de contrôle (MC) utilisent un second seuil choisi compris entre 25000 et 35000.

5. Dispositif selon l'une des revendications précédentes, **caractérisé en ce que** les moyens de contrôle (MC) limitent la valeur déterminée à un maximum de 10% de la valeur de consigne de couple.

6. Calculateur (CA), **caractérisé en ce qu'**il comprend un dispositif de contrôle (DC) selon l'une des revendications précédentes.

7. Véhicule (V) comprenant i) une boîte de vitesses (BV) de type automatique à trains épicycloïdaux définissant des rapports et associés chacun à un embrayage (EMj) comportant un piston (Pj) exerçant une pression sur des disques (DEj), et ii) une machine motrice (MT) fournissant un couple moteur à ladite boîte de vitesses (BV), **caractérisé en ce qu'**il comprend en outre un dispositif de contrôle (DC) selon l'une des revendications 1 à 5 ou un calculateur (CA) selon la revendication 6.

8. Véhicule selon la revendication 7, **caractérisé en ce qu'**il est de type automobile, notamment automobile hybride.

9. Procédé de contrôle pour un véhicule (V) comprenant
- i) une boîte de vitesses (BV) de type automatique à trains épicycloïdaux définissant des rapports et associés chacun à un embrayage (EMj) comportant un piston (Pj) exerçant une pression sur des disques (DEj), et
- ii) une machine motrice (MT) fournissant un couple moteur à ladite boîte de vitesses (BV), le procédé comprenant une étape dans laquelle, lorsqu'un changement d'un rapport sortant à un rapport entrant a été décidé, le procédé détermine une pression devant être exercée par le piston (Pj) associé audit rapport entrant pour transmettre intégralement le couple moteur, et **caractérisé en ce que** le procédé commande
- soit le couple moteur à une valeur de consigne de couple et la pression à une pression optimale pour transmettre intégralement la consigne de couple lorsqu'une température d'huile dans la boîte de vitesses (BV) est inférieure à un premier seuil choisi et qu'un nombre d'utilisations cumulées de l'embrayage (EMj) contenant ce piston (Pj) depuis la mise en service du véhicule est inférieur à un second seuil choisi,
- soit le couple moteur à une valeur de consigne de couple réduite et la pression à une pression réduite pour transmettre intégralement la consigne de couple réduite lorsque la température d'huile est supérieure au premier seuil choisi ou que le nombre d'utilisations est supérieur au second seuil choisi, la valeur de consigne de couple réduite étant égale à la valeur de consigne de couple moins une valeur déterminée et la pression réduite étant inférieure à la pression optimale.

10. Procédé selon la revendication 9, **caractérisé en ce que** dans ladite étape, le procédé détermine la valeur déterminée en fonction d'au moins un paramètre choisi parmi une vitesse en cours du véhicule (V), le rapport sortant, et une manœuvre en cours du véhicule (V).

## Patentansprüche

1. Steuergerät (DC) für ein Fahrzeug (V) umfassend
- i) ein Automatikgetriebe (BV) mit Planetenradsätzen (TEj), die Gänge definieren und denen jeweils eine Kupplung (EMj) zugeordnet ist, die einen Kolben (Pj) umfasst, der Druck auf Scheiben (DEj) ausübt, und
- ii) eine Antriebsmaschine (MT), die Motordrehmoment an das Getriebe (BV) liefert,
- iii) Steuermittel (MC), die, wenn ein Wechsel von einem Ausgangsgang in einen Eingangsgang entschieden wurde, einen Druck bestimmen, der von dem dem Eingangsgang zugeordneten Kolben (Pj) auszuüben ist, um das Motordrehmoment vollständig zu übertragen, **dadurch gekennzeichnet, dass** die Steuermittel (MC) steuern :
- entweder das Motordrehmoment bei einem Drehmoment-Sollwert und der Druck bei einem optimalen Druck, um den Drehmoment-Sollwert vollständig zu übertragen, wenn eine Öltemperatur im Getriebe (BV) niedriger als ein erster gewählter Schwellenwert ist, und dass eine Anzahl von kumulativen Verwendungen des Kupplung (EMj), die diesen Kolben (Pj) enthält, da die Inbetriebnahme des Fahrzeugs kleiner als eine zweite gewählte Schwelle ist,
- entweder das Motordrehmoment bei einem reduzierten Drehmomentsollwert und der Druck bei einem reduzierten Druck, um den reduzierten Drehmomentsollwert vollständig zu übertragen, wenn die Öltemperatur höher als der erste gewählte Schwellenwert ist oder wenn die Anzahl der Verwendungen höher als der zweite gewählte Schwellenwert ist, wobei der reduzierte Drehmoment-Sollwert gleich dem Drehmoment-Sollwert minus einem bestimmten Wert ist und der reduzierte Druck niedriger als der optimale Druck ist.

2. Vorrichtung nach Anspruch 1, **dadurch gekennzeichnet, dass** die Steuermittel (MC) den bestimmten Wert in Abhängigkeit von mindestens einem Parameter bestimmen, der aus einer aktuellen Geschwindigkeit des Fahrzeugs (V), dem Ausgangsgang und einem laufenden Manöver ausgewählt wird des Fahrzeugs (V).

3. Vorrichtung nach Anspruch 1 oder 2, **dadurch gekennzeichnet, dass** die Steuermittel (MC) einen ersten Schwellenwert verwenden, der zwischen 90°C und 110°C gewählt wird.

4. Vorrichtung nach einem der Ansprüche 1 bis 3, **dadurch gekennzeichnet, dass** die Steuermittel (MC) einen zweiten Schwellenwert verwenden, der zwischen 25000 und 35000 gewählt ist.

5. Vorrichtung nach einem der vorhergehenden Ansprüche, **dadurch gekennzeichnet, dass** die Steuermittel (MC) den ermittelten Wert auf maximal 10 % des Drehmoment-Sollwerts begrenzen.

6. Computer (CA), **dadurch gekennzeichnet, dass** er eine Steuereinrichtung (DC) nach einem der vorhergehenden Ansprüche umfasst.

7. Fahrzeug (V), umfassend i) ein Automatikgetriebe (BV) mit Planetenradsätzen, die Gänge definieren und denen jeweils eine Kupplung (EMj) zugeordnet ist, die einen Kolben (Pj) umfasst, der Druck auf Scheiben (DEj) ausübt, und ii) einen Antrieb Antriebsvorrichtung (MT), die Motordrehmoment an das Getriebe (BV) liefert, **dadurch gekennzeichnet, dass** sie ferner eine Steuervorrichtung (DC) nach einem der Ansprüche 1 bis 5 oder einen Computer (CA) nach Anspruch 6 umfasst.

8. Fahrzeug nach Anspruch 7, **dadurch gekennzeichnet, dass** es vom Automobiltyp ist, insbesondere ein Hybridauto.

9. Steuerverfahren für ein Fahrzeug (V), umfassend
- i) ein Automatikgetriebe (BV) mit Planetenradsätzen, die Gänge definieren und denen jeweils eine Kupplung (EMj) zugeordnet ist, die einen Kolben (Pj) umfasst, der Druck auf Scheiben (DEj) ausübt, und
- ii) eine Antriebsmaschine (MT), die Motordrehmoment an das Getriebe (BV) liefert,
das Verfahren einen Schritt umfasst, in dem, wenn ein Wechsel von einem Ausgangsgang zu einem Eingangsgang entschieden wurde, das Verfahren einen Druck bestimmt, der durch den Kolben (Pj) auszuüben ist, der dem Eingangsgang zugeordnet ist, um das Motordrehmoment vollständig zu übertragen, und **dadurch gekennzeichnet, dass** das Verfahren steuert:
- entweder das Motordrehmoment bei einem Drehmoment-Sollwert und der Druck bei einem optimalen Druck, um den Drehmoment-Sollwert vollständig zu übertragen, wenn eine Öltemperatur im Getriebe (BV) niedriger als ein erster gewählter Schwellenwert ist, und dass 'eine Anzahl von kumulativen Verwendungen des Kupplung (EMj), die diesen Kolben (Pj) enthält, da die Inbetriebnahme des Fahrzeugs kleiner als eine zweite gewählte Schwelle ist,
- entweder das Motordrehmoment bei einem reduzierten Drehmomentsollwert und der Druck bei einem reduzierten Druck, um den reduzierten Drehmomentsollwert vollständig zu übertragen, wenn die Öltemperatur höher als der erste gewählte Schwellenwert ist oder wenn die Anzahl der Verwendungen höher als der zweite gewählte Schwellenwert ist, wobei der reduzierte Drehmoment-Sollwert gleich dem Drehmoment-Sollwert minus einem bestimmten Wert ist und der reduzierte Druck niedriger als der optimale Druck ist.

10. Verfahren nach Anspruch 9, **dadurch gekennzeichnet, dass** das Verfahren in dem Schritt den ermittelten Wert als Funktion mindestens eines Parameters bestimmt, der aus einer aktuellen Geschwindigkeit des Fahrzeugs (V), dem Ausgangsgang und einem aktuellen Manöver des Fahrzeugs ausgewählt ist Fahrzeug (V).

## Claims

1. Control device (DC) for a vehicle (V) comprising
- i) a gearbox (BV) of the automatic type with planetary gear sets (TEj) defining ratios and each associated with a clutch (EMj) comprising a piston (Pj) exerting pressure on discs (DEj), and
- ii) a prime mover (MT) supplying engine torque to said gearbox (BV),
- iii) control means (MC) which, when a change from an outgoing gear to an incoming gear has been decided, determine a pressure to be exerted by the piston (Pj) associated with the incoming gear in order to fully transmit the engine torque, **characterized in that** the control means (MC) control:
- either the engine torque at a torque setpoint value and the pressure at an optimum pressure to fully transmit the torque setpoint when an oil temperature in the gearbox (BV) is lower than a first chosen threshold and that a number of cumulative uses of the clutch (EMj) containing this piston (Pj) since the commissioning of the vehicle is less than a second chosen threshold,
- either the engine torque at a reduced torque setpoint value and the pressure at a reduced pressure to fully transmit the reduced torque setpoint when the oil temperature is higher than the first chosen threshold or when the number of uses is higher than the second threshold chosen, the reduced torque setpoint value being equal to the torque setpoint value less a determined value and the reduced pressure being lower than the optimum pressure.

2. Device according to claim 1, **characterized in that** the said control means (MC) determine the value determined as a function of at least one parameter chosen from among a current speed of the vehicle (V), the outgoing gear, and a maneuver in progress. of the vehicle (V).

3. Device according to claim 1 or 2, **characterized in that** the control means (MC) use a first threshold chosen between 90°C and 110°C.

4. Device according to one of claims 1 to 3, **characterized in that** the control means (MC) use a second threshold chosen between 25000 and 35000.

5. Device according to one of the preceding claims, **characterized in that** the control means (MC) limit the determined value to a maximum of 10% of the torque setpoint value.

6. Computer (CA), **characterized in that** it comprises a control device (DC) according to one of the preceding claims.

7. Vehicle (V) comprising i) a gearbox (BV) of the automatic type with planetary gear sets defining ratios and each associated with a clutch (EMj) comprising a piston (Pj) exerting pressure on discs (DEj), and ii) a prime mover (MT) supplying engine torque to said gearbox (BV), **characterized in that** it further comprises a control device (DC) according to one of Claims 1 to 5 or a computer (CA) according to claim 6.

8. Vehicle according to Claim 7, **characterized in that** it is of the automobile type, in particular a hybrid automobile.

9. Control method for a vehicle (V) comprising
- i) a gearbox (BV) of the automatic type with planetary gear sets defining ratios and each associated with a clutch (EMj) comprising a piston (Pj) exerting pressure on discs (DEj), and
- ii) a prime mover (MT) supplying engine torque to said gearbox (BV),
the method comprising a step in which, when a change from an outgoing gear to an incoming gear has been decided, the method determines a pressure to be exerted by the piston (Pj) associated with said incoming gear to fully transmit the engine torque, and **characterized in that** the method controls:
- either the engine torque at a torque setpoint value and the pressure at an optimum pressure to fully transmit the torque setpoint when an oil temperature in the gearbox (BV) is lower than a first chosen threshold and that a number of cumulative uses of the clutch (EMj) containing this piston (Pj) since the commissioning of the vehicle is less than a second chosen threshold,
- either the engine torque at a reduced torque setpoint value and the pressure at a reduced pressure to fully transmit the reduced torque setpoint when the oil temperature is higher than the first chosen threshold or when the number of uses is higher than the second threshold chosen, the reduced torque setpoint value being equal to the torque setpoint value less a determined value and the reduced pressure being lower than the optimum pressure.

10. Method according to claim 9, **characterized in that** in said step, the method determines the value determined as a function of at least one parameter chosen from among a current speed of the vehicle (V), the outgoing gear, and a current maneuver of the vehicle (V).
